# EUROPÄISCHE PATENTSCHRIFT

(11) **EP 3 077 670 B1**
(45) Veröffentlichungstag und Bekanntmachung des Hinweises auf die Patenterteilung: **16.08.2017**
(21) Anmeldenummer: 14758124.3
(22) Anmeldetag: 28.08.2014
(51) Int. Cl.: F03D 13/20, E04H 12/08, E04H 12/10, E02B 17/00

(54) **ÜBERGANGSKÖRPER ZWISCHEN TURMABSCHNITTEN EINER WINDKRAFTANLAGE UND TURM EINER WINDKRAFTANLAGE UMFASSEND EINEN ÜBERGANGSKÖRPER**
TRANSITION BODY BETWEEN TOWER SECTIONS OF A WIND TURBINE, AND TOWER OF A WIND TURBINE COMPRISING A TRANSITION BODY
ÉLÉMENT DE TRANSITION ENTRE DES PARTIES D'UNE TOUR D'UNE ÉOLIENNE ET TOUR D'UNE ÉOLIENNE COMPORTANT UN ÉLÉMENT DE TRANSITION

(30) Priorität: 23.09.2013 DE 102013110495
(43) Veröffentlichungstag der Anmeldung: 12.10.2016
(73) Patentinhaber: ThyssenKrupp Steel Europe AG, 47166 Duisburg (DE)
(72) Erfinder: PATBERG, Lothar, 47445 Moers (DE); DREWES, Stephan, 41236 Mönchengladbach (DE); PATON, Adrian, 46539 Dinslaken (DE); SAVVAS, Konstantinos, 40470 Düsseldorf (DE); HIRT, Mark, 44791 Bochum (DE); BOGATSCH, Maik, 47269 Duisburg (DE)
(74) Vertreter: thyssenkrupp Intellectual Property GmbH
(86) Internationale Anmeldenummer: PCT/EP2014/068307
(87) Internationale Veröffentlichungsnummer: WO 2015/039852

(56) Entgegenhaltungen:
- EP-A1- 2 072 685
- EP-A1- 2 333 163
- EP-A1- 2 597 227
- WO-A1-2005/040605

## Beschreibung

Die Erfindung betrifft einen Übergangskörper zur Anordnung zwischen einem oberen Turmabschnitt und einem unteren Turmabschnitt eines Turms für eine Windkraftanlage, mit einem im Wesentlichen ringförmigen oberen Anbindungsflansch zum Verbinden des Übergangskörpers mit einem oberen Turmabschnitt und mit wenigstens drei im Wesentlichen ringförmigen unteren Anbindungsflanschen jeweils zum Verbinden mit einer Eckstiele eines unteren Turmabschnitts, wobei der Übergangskörper mehrere um eine zentrale Turmachse herum angeordnete Segmente aufweist, wobei die Anzahl der Segmente der Anzahl der Eckstiele entspricht, wobei die oberen Abschnitte der Segmente an der Außenseite des Übergangskörpers einen ringförmig umlaufenden, den oberen Anbindungsflansch tragenden Anschlussmantel bilden und wobei die unteren Abschnitte der Segmente jeweils ringförmig umlaufende, einen unteren Anbindungsflansch tragende Segmentmäntel bilden. Ferner betrifft die Erfindung einen Turm für eine Windkraftanlage mit einem oberen Turmabschnitt in Form eines Rohrturms, einem wenigstens drei Eckstiele aufweisenden unteren Turmabschnitt und einem den oberen Turmabschnitt mit dem unteren Turmabschnitt verbindenden Übergangskörper.

Um den Wirkungsgrad von Windkraftanlagen zu verbessern, werden die Naben in immer größeren Höhen angeordnet sowie größere Rotoren und leistungsstärkere Generatoren eingesetzt. Dies erfordert Turmsegmente mit immer größeren Durchmessern und größeren Wandstärken, damit die Türme von Windkraftanlagen eine ausreichende Steifigkeit, Knickfestigkeit und Dauerfestigkeit aufweisen. Bereits vorgefertigte rohrförmige Turmsegmente, deren Durchmesser einen bestimmen Wert, etwa 4,4 m deutlich übersteigen, können nur mit immensem Aufwand an den Montageort der Windkraftanlage transportiert werden. Dies liegt insbesondere an den Breiten der für den Transport zur Verfügung stehenden Straßen und an den Durchfahrtshöhen der zu passierenden Brücken. Aber selbst der Transport über Wasserwege ist bei sehr großen Turmsegmenten äußerst aufwendig.

Ein möglicher Lösungsansatz, der beispielsweise in der DE 603 17 372 T2 und auch in der WO 2009/048955 A1 vorgeschlagen wird, ist die sogenannte längsorientierte Bauweise, die insbesondere im unteren Bereich des Turms angewendet wird. Dabei werden bogenförmige Turmabschnitte an die Baustelle transportiert, die dann vor Ort zu rohrförmigen Turmsegmenten zusammengesetzt werden. Die Verbindung der bogenförmigen Turmabschnitte kann durch Verschraubungen mittels entsprechender Flansche erfolgen. Nachteilig an der längsorientierten Bauweise ist jedoch, dass sich die bogenförmigen Turmabschnitte während des Transports verformen können, was die Montage vor Ort erheblich erschweren oder gar verhindern kann. Zudem ist der Montageaufwand deutlich erhöht.

Zudem sind Windkraftanlagen bekannt, bei denen der Rotor und der Generator auf einem Fachwerkturm montiert sind. Diese Bauweise hat sich insbesondere bei kleinen und niedrigen Anlagen bewährt. Bei größeren und höheren Anlagen ist der Montageaufwand nämlich unverhältnismäßig hoch, da die Montage der Einzelteile des Fachwerks fast ausschließlich vor Ort erfolgen muss und somit eine zeit- und kostensparende Vorkonfektionierung kaum möglich ist.

Aus der DE 10 2006 056 274 A1 ist ein Turm einer Windkraftanlage bekannt, der im unteren Bereich als Gitterturm (Fachwerkturm) mit wenigstens drei Eckstielen und im oberen Bereich als Rohrturm mit runden Querschnitten ausgebildet ist. Der obere Turmabschnitt und der untere Turmabschnitt sind durch einen Übergangskörper miteinander verbunden. Der Übergangskörper ist dabei in Form eines Kegelstumpfmantels ausgebildet, wobei der jeweilige Eckstiel in den Übergangskörper hineinragt und dort durch zwei Längsschweißnähte mit der Außenseite des Kegelstumpfmantels verbunden ist.

Aus der DE 103 39 438 A1 ist ein Turm für eine Windkraftanlage bekannt, der ebenfalls aus einem unteren Turmabschnitt in Form eines Gitterturms und einem oberen Turmabschnitt in Form eines Rohrturms gebildet ist. Zwischen diesen beiden Turmabschnitten ist ein Übergangskörper vorgesehen, der den unteren Turmabschnitt mit dem oberen Turmabschnitt verbindet. Ein vergleichbarer Turm einer Windkraftanlage ist in der WO 2013/092626 A1 beschrieben. Weitere Übergangskörper für Windkraftanlagen werden in der WO 2005/040605 A1, EP 2 597 227 A1 und EP 2 072 685 A1 beschrieben. Die zuvor genannten Hybridtürmen für Windkraftanlagen mit einer sogenannten aufgelösten Turmstruktur, die einen unteren Turmabschnitt in Fachwerkbauweise und einen oberen Turmabschnitt in Form einer Röhre aufweisen, sind mit dem Nachteil behaftet, dass der Übergangskörper zwischen dem oberen und dem unteren Turmabschnitt einen erhöhten Montageaufwand erfordert und keinen optimalen Kraftfluss ermöglicht.

Daher liegt der vorliegenden Erfindung die Aufgabe zugrunde, den Übergangskörper und den Turm jeweils der eingangs genannten und zuvor näher beschriebenen Art derart auszugestalten und weiterzubilden, dass der Montageaufwand gesenkt und der Kraftfluss verbessert werden kann, ohne dass dies zu einem unverhältnismäßigen Anstieg des Transportaufwands führt.

Diese Aufgabe ist bei einem Übergangskörper nach dem Oberbegriff des Anspruchs 1 dadurch gelöst, dass die Segmentmäntel im oberen Bereich an nach innen weisenden Abschnitten in spitzem Winkel ineinander übergehen.

Zudem ist die genannte Aufgabe bei einem Turm nach dem Oberbegriff des Anspruchs 13 dadurch gelöst, dass der Übergangskörper nach einem der Ansprüche 1 bis 12 ausgebildet ist.

Erfindungsgemäß ist also ein Übergangskörper als Übergang zwischen einem oberen Turmabschnitt und einem unteren Turmabschnitt vorgesehen, um auf diese Weise einen Turm für eine Windkraftanlage bereitzustellen. Zum Verbinden des Übergangskörpers ist ein oberer Anbindungsflansch vorgesehen, der ringförmig ausgebildet ist. Vorzugsweise ist der obere Anbindungsflansch kreisförmig ausgebildet, um mit einem ebenso geformten Flansch eines Rohrturms verbunden zu werden. Daher weist der Rohrturm vorzugsweise einen kreisförmigen, insbesondere etwa gleichgroßen, Querschnitt auf, was die Stabilität des Turms unter Windlast verbessert. Grundsätzlich könnte der obere Anbindungsflansch auch oval oder eckig ausgebildet sein, auch wenn dies grundsätzlich weniger bevorzugt ist. Um ein Verschweißen in großen Höhen zu vermeiden, ist es bevorzugt, wenn der obere Anbindungsflansch zum Verschrauben mit einem Anbindungsflansch des oberen Turmabschnitts vorgesehen ist.

Der untere Turmabschnitt stellt erfindungsgemäß vorzugsweise eine aufgelöste Turmstruktur dar, die mehrere Beine in Form von Eckstielen umfasst. Um eine ausreichende Standsicherheit zu gewährleisten, sind wenigstens drei Eckstiele vorgesehen. Es können aber auch bevorzugt mindestens vier Eckstiele vorgesehen sein, um die Standsicherheit weiter zu verbessern. Ein guter Kompromiss zwischen Standsicherheit und Montageaufwand kann insbesondere mit fünf oder sechs Eckstielen erzielt werden. Folglich weist der Übergangskörper wenigstens drei Anbindungsflansche auf, die jeweils mit einer Eckstiele verbunden werden können. Während der obere Turmabschnitt vorzugsweise parallel zur zentralen Turmachse ausgerichtet ist, sind die Eckstiele zur besseren Kraftableitung vorzugsweise leicht schräg nach außen ausgerichtet und bilden folglich einen spitzen Winkel mit der zentralen Turmachse. Zudem ist es bevorzugt, wenn die Eckstiele, vorzugsweise gleichmäßig, um die zentrale Turmachse herum angeordnet sind. So kann beispielsweise eine Windlast von allen Seiten gleich gut abgeleitet werden.

Eine konstruktive Vereinfachung wird erreicht, indem der Übergangskörper um die zentrale Turmachse herum verteilt angeordnete Segmente aufweist, wobei die Anzahl der Segmente der Anzahl der Eckstiele entspricht. Daher können die vom oberen Turmabschnitt abgeleiteten Kräfte über die Segmente an die Eckstiele verteilt und über die Eckstiele abgeleitet werden. Zum Zwecke eines gleichmäßigen Aufbaus des Turms können die Segmente gleichförmig um die zentrale Turmachse herum angeordnet werden. Die oberen Abschnitte der Segmente bilden an der Außenseite des Übergangskörpers gemeinsam einen ringförmig umlaufenden, vorzugsweise geschlossenen Anschlussmantel. Dieser Anschlussmantel trägt den oberen Anbindungsflansch und kann die vom oberen Turmabschnitt übertragenen Kräfte folglich gleichförmig nach unten ableiten.

Während die oberen Abschnitte der Segmente im äußeren Bereich ineinander übergehen, bilden die Segmente im unteren Bereich separate ringförmig umlaufende Segmentmäntel. Während der Anschlussmantel vorzugsweise einen kreisrunden Querschnitt aufweist, weisen die Segmentmäntel vorzugsweise wenigstens in Abschnitten von einer kreisrunden Querschnittsform ab. Gleichzeitig ist es jedoch bevorzugt, wenn die Segmentmäntel an ihren unteren Enden kreisrunde Querschnitte aufweisen. Dann können die Segmentmäntel Kräfte gleichförmig über die unteren Anbindungsflansche auf Eckstiele ableiten. Zu dem gleichen Zweck weisen die Eckstiele vorzugsweise gleichgroße, insbesondere ebenfalls kreisrunde, Querschnitte auf. Auch die unteren Anbindungsflansche sind zur Vermeidung des Schweißens in großer Höhe zum Verschrauben mit entsprechenden Anbindungsflanschen der Eckstiele ausgebildet.

Dabei hat die Erfindung erkannt, dass die Segmente einen verbesserten Kraftfluss erlauben, wenn die Segmentmäntel im oberen Bereich an nach innen weisenden Abschnitten in spitzem Winkel ineinander übergehen. Auf diese Weise werden Spannungsspitzen vermindert. Die nach innen weisenden Abschnitte können dabei zentral nach innen in Richtung der zentralen Turmachse weisen. Dies ist jedoch nicht erforderlich. Die entsprechenden Abschnitte können auch nach innen in Richtung eines angrenzenden Eckstiels weisen. Folglich werden die äußeren Bereiche der Segmente im Bereich des äußeren Anschlussmantels zusammengeführt und die inneren Bereiche der Segmente im inneren Bereich des Übergangskörpers, insbesondere im Bereich der zentralen Turmachse, zusammengeführt. Die entsprechenden Segmente haben dabei den zusätzlichen Vorteil, dass sie aufgrund ihrer Abmessung verhältnismäßig einfach separat an den Ort der Montage des Turms transportiert und dort zu einem Übergangskörper zusammengesetzt werden können. Dies kann bedarfsweise durch Verschweißen erfolgen. Das Verschweißen kann dabei auf dem Boden erfolgen und der Übergangskörper erst nach dem Verschweißen der Segmente untereinander auf den unteren Turmabschnitt gehoben werden. Zudem führt die Bereitstellung des oberen Anbindungsflansches und der unteren Anbindungsflansche zu einer recht einfachen Montage des Übergangskörpers zwischen dem unteren Turmabschnitt und dem oberen Turmabschnitt des Turms einer Windkraftanlage.

Bei einer ersten bevorzugten Ausgestaltung des Übergangskörpers sind die Segmente im Wesentlichen gleichartig ausgebildet. Auf diese Weise kann die Vorkonfektionierung der Segmente und deren Montage vereinfacht werden. Dies ist insbesondere der Fall, wenn die Segmente im Wesentlichen baugleich sind. Dann können in hohem Maße Gleichteile verwendet werden und es wird eine fehlerhafte Montage vermieden.

Die Segmentmäntel des Übergangskörpers können derart ineinander übergehen, dass der Übergangskörper im Bereich der zentralen Turmachse durch die Segmentmäntel nach unten abgeschlossen ist. Dies führt zu einer Aussteifung des Übergangskörpers und erlaubt zudem eine gleichmäßigere Ableitung von Kräften, die auf den Turm für Windkraftanlagen wirken.

Alternativ oder zusätzlich können die Segmentmäntel derart ineinander übergehen, dass die Übergänge der Segmentmäntel eine sternförmige Struktur bilden. Diese sternförmige Struktur geht vorzugsweise aus von der zentralen Turmachse, wobei die zentrale Turmachse weiter vorzugsweise durch das Zentrum der sternförmigen Struktur verläuft. In jedem Fall führt die sternförmige Struktur zu einer Aussteifung des Übergangskörpers. Die Segmente können entlang der sternförmigen Struktur Verbindungsrippen bilden, entlang derer sich die Segmente gegeneinander abstützen, insbesondere wenn eine seitliche Last, etwa eine Windlast, auf den Turm wirkt.

Gleichzeitig kann die sternförmige Struktur zu einer gleichmäßigeren Ableitung von Kräften führen, um Spannungsspitzen in der Struktur des Übergangskörpers zu mindern. Grundsätzlich kann die sternförmige Struktur etwa auf Höhe des oberen Anbindungsflansches oder auch darunter angeordnet sein. Vorzugsweise ist die sternförmige Struktur aber, insbesondere deutlich, oberhalb der unteren Anbindungsflansche vorgesehen.

Die oberen Bereiche der Segmente, bedarfsweise der Segmentmäntel, können die Form eines Kreissegments aufweisen, und zwar insbesondere in einer Ebene quer zur zentralen Turmachse, also in einer horizontalen Ebene. Anders ausgedrückt, können die oberen Bereiche der Segmente, bedarfsweise der Segmentmäntel, in Form von Tortenstücken ausgebildet sein. Die Kreissegmente weisen dabei jeweils vorzugsweise einen Öffnungswinkel auf, die sich im Wesentlichen zu 360° ergänzen und weiter vorzugsweise jeweils gleich groß sind. Die sich daraus ergebende Symmetrie führt ebenfalls zu einer weiteren Aussteifung des Übergangskörpers sowie einem gleichmäßigeren Kraftfluss.

Damit die Segmente im oberen Bereich sowohl im inneren Bereich des Übergangskörpers als auch im äußeren Bereich des Übergangskörpers ineinander übergehen und im unteren Bereich separate Segmentmäntel bilden können, bietet es sich an, wenn die Form der Querschnitte der Segmentmäntel sich jedenfalls in einem oberen Bereich entlang der Längserstreckung der Segmentmäntel stetig ändert. Dadurch werden Spannungsspitzen vermindert und die Gefahr eines lokalen Materialversagens, insbesondere durch Knicken, verringert. Dabei kann sich bedarfsweise auch die Querschnittsfläche der Querschnitte stetig verändern, wenn dies aufgrund der Querschnitte der Eckstiele zweckmäßig ist, um einen unstetigen Querschnittsübergang von den Segmenten auf die Eckstiele zu vermeiden. Eine entsprechende Unstetigkeit könnte einen erhöhten Materialbedarf auf Seiten des Übergangskörpers oder auf der Seite der Eckstiele bedeuten.

Insbesondere wird es bevorzugt sein, wenn sich die Segmentmäntel nach unten verjüngen. Mit anderen Worten wird die Querschnittsfläche der Segmentmäntel nach unten hin abnehmen. Dies ermöglicht eine materialsparende Verwendung von Eckstielen mit geringen Wandstärken und/oder Querschnittsflächen, also Durchmessern, wenn die Querschnitte der Eckstiele kreisförmig sind, was aus Gründen der Steifigkeit der Eckstiele bevorzugt sein wird.

Die Steifigkeit des Turms insgesamt kann alternativ oder zusätzlich auch dadurch gesteigert werden, dass der obere Anschlussflansch und/oder die unteren Anschlussflansche kreisförmig ausgebildet sind.

Um die Montage und die Wartung zu vereinfachen, können der obere Anbindungsflansch und/oder die unteren Anbindungsflansche innenliegend angeordnet sein. Innenliegend bedeutet dabei insbesondere innen bezogen auf die Segmentmäntel im Falle der unteren Anbindungsflansche oder innen bezogen auf den Anschlussmantel im Falle des oberen Anbindungsflansches. In beiden Fällen läuft der jeweilige Flansch bezogen auf den jeweiligen Mantel umfangsseitig vollständig um, da dies ebenfalls zu einer steiferen und stabileren Verbindung führt.

Die Fertigung des Überkörpers kann besonders einfach erfolgen, indem die Segmentmäntel, vorzugsweise die Segmente, durch im Wesentlichen längs verschweißte Stahlbleche gebildet werden. Die Flansche könne dabei vorzugsweise durch separate Bauelemente gebildet werden. Durch das Verschweißen von Stahlblechen können auch komplexe Formen einfach gefertigt werden. In diesem Zusammenhang bietet es sich besonders an, wenn es sich bei den Stahlblechen um gebogene dreieckige und/oder trapezförmige Stahlbleche handelt. Dadurch kann die Fertigung der Übergangskörper weiter vereinfacht werden.

Alternativ können die Segmentmäntel durch seitliche Verbindungsbleche und/oder ein im Wesentlichen quer zur zentralen Turmachse angeordnetes unteres Verbindungsblech miteinander verbunden werden. Das untere Verbindungsblech ist also im mit den Turmabschnitten verbundenen Zustand vorzugsweise horizontal ausgerichtet. Das Verbindungsblech oder die Verbindungsbleche können der weiteren Aussteifung des Übergangskörpers dienen. Insbesondere bei besonders zerklüfteter Ausgestaltung des Übergangskörpers kann auf diese Weise auch erreicht werden, dass dem Wind weniger Angriffsfläche geboten wird und der Übergangskörper dem Wind insgesamt weniger Strömungswiderstand entgegensetzt.

Hinsichtlich des Turms ist bei einer ersten bevorzugten Ausgestaltung der Erfindung der obere Turmabschnitt im Wesentlichen als Hohlprofil ausgebildet. Auf diese Weise wird bei geringem Gewicht eine hohe Steifigkeit erreicht. Insbesondere ist der obere Turmabschnitt rohrförmig, bedarfsweise mit sich nach oben verjüngendem Querschnitt, ausgebildet. Alternativ oder zusätzlich können aus den gleichen Gründen die Eckstiele im Wesentlichen als Hohlprofil ausgebildet sein und vorzugsweise eine rohrförmige Gestalt aufweisen, deren Querschnitt sich bedarfsweise nach unten hin verjüngen kann.

Besonders bevorzugt ist es, wenn der untere Turmabschnitt als Fachwerkturm ausgebildet ist. Diese Art Turmabschnitt wird auch als Gitterturm bezeichnet. Bei dieser Art unterem Turmabschnitt kommen die Vorteile der Erfindung in besonderem Maße zum Tragen. Zur weiteren Aussteifung des unteren Turmabschnitts können die Eckstiele durch Streben untereinander verbunden sein. Diese verlaufen zu diesem Zweck vorzugsweise horizontal und/oder diagonal, wobei horizontale und diagonale Streben besonders bevorzugt sind.

Die Erfindung wird nachfolgend anhand einer lediglich Ausführungsbeispiele darstellenden Zeichnung näher erläutert. In der Zeichnung zeigt
- Fig. 1: einen erfindungsgemäßen Turm einer Windkraftanlage umfassend einen erfindungsgemäßen Übergangskörper in einer perspektivischen Darstellung,
- Fig. 2: einen ersten erfindungsgemäßen Übergangskörper in einer perspektivischen Ansicht von oben,
- Fig. 3: den Übergangskörper aus Fig. 2 in einer perspektivischen Ansicht von unten,
- Fig. 4A-D: ein Detail des Übergangskörpers aus Fig. 2 in unterschiedlichen Ansichten,
- Fig. 5: ein Segment des Übergangskörpers aus Fig. 2 in einer perspektivischen Ansicht,
- Fig. 6: einen zweiten erfindungsgemäßen Übergangskörper in einer perspektivischen Ansicht von oben und

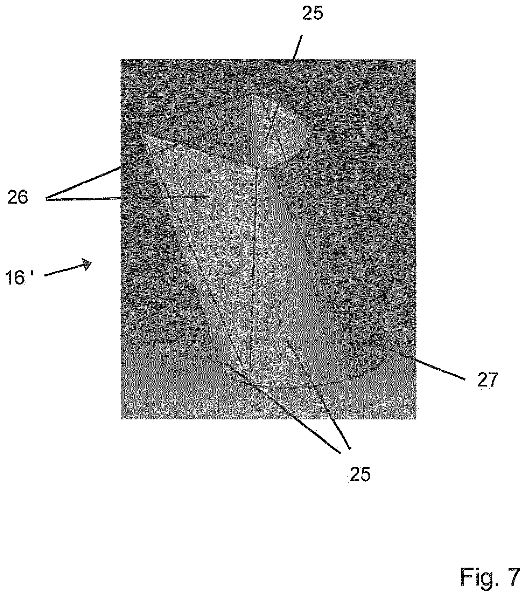

- Fig. 7: ein Segment des Übergangskörpers aus Fig. 7 in einer perspektivischen Ansicht.

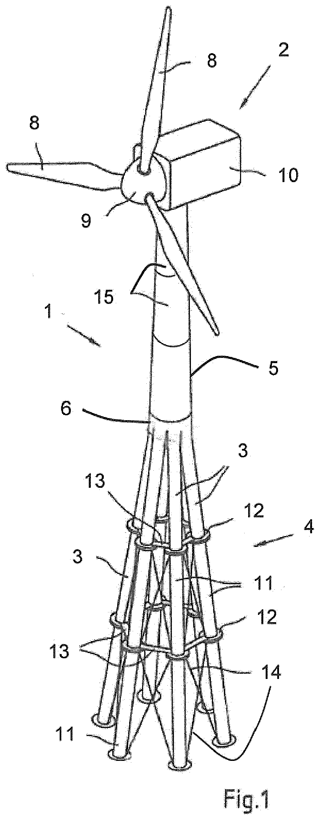

Der in Fig. 1 dargestellte Turm 1 einer Windkraftanlage 2 ist aus einem mehrere Eckstiele 3 aufweisenden unteren Turmabschnitt 4, einem oberen Turmabschnitt 5 in Form eines im Querschnitt runden Rohrturms und einem dazwischen angeordneten Übergangskörper 6 aufgebaut. Am oberen Ende des Rohrturms des oberen Turmabschnitts 5 ist eine Windkraftanlage 2 montiert, die um eine im Wesentlichen vertikal verlaufende Achse drehbar gelagert ist. Die Windkraftanlage 2 umfasst einen Rotor 7 mit drei Rotorblättern 8, der um eine horizontale Achse drehbar ist. Zudem sind die Rotorblätter 8 um ihre Längserstreckung drehbar an der Nabe 9 der Windkraftanlage 2 montiert, um im Wesentlichen stufenlos gegen den Wind angestellt werden zu können. In dem sogenannten Gondelgehäuse 10 ist ein Generator angeordnet, dessen Welle über ein Getriebe und eine Kupplung mit dem Rotor 7 drehstarr verbunden ist.

Der untere Turmabschnitt 4 weist in dem dargestellten und insoweit bevorzugten Turm 1 sechs Eckstiele 3 auf, wobei auch mehr oder weniger als sechs Eckstiele 3 möglich wären. Der Turm 1 weist aber mindestens drei Eckstiele 3 auf, deren horizontaler Abstand voneinander ausgehend vom Übergangskörper 6 nach unten hin zunimmt. Die vorzugsweise im Wesentlichen geradlinigen Eckstiele 3 bilden somit eine drei- bzw. mehrbeinige Turmkonstruktion, deren Beine spitzwinklig zueinander gespreizt sind. Der untere Turmabschnitt 4 kann auch als aufgelöste Turmstruktur bezeichnet werden. Jeder Eckstiel 3 des dargestellten und insoweit bevorzugten Turms 1 ist aus mehreren, vorliegend drei, in Längsrichtung miteinander verbundenen Stahlrohrprofilen 11 zusammengesetzt und damit selbst rohrförmig ausgebildet. Die Verbindungsstellen der Stahlrohrprofile 11 werden durch verschraubte, gelochte Flansche 12 gebildet, welche als Ringflansch ausgebildet sein können.

Vorzugsweise handelt es sich bei den für die Eckstiele 3 verwendeten Stahlrohrprofilen 11 um Gleichteile, die längsnahtgeschweißt oder spiralnahtgeschweißt sind. Die Stahlrohrprofile 11 der Eckstiele 3 weisen vorzugsweise eine Wanddicke im Bereich von 5 mm bis 30 mm auf, während der Durchmesser vorzugsweise zwischen 500 mm bis 1.900 mm beträgt.

Beim dargestellten und insoweit bevorzugten Turm 1 sind die Eckstiele 3 untereinander durch Horizontalstreben 13 und Diagonalstreben 14 miteinander verbunden. Die Horizontalstreben 13 und Diagonalstreben 14 sind aus gleichartigen Stahlprofilen gebildet, die beispielsweise einen U-förmigen, L-förmigen oder T-förmigen Querschnitt aufweisen. Der untere Turmabschnitt 4 weist somit einen modularen Aufbau unter Verwendung möglichst von Gleichteilen auf.

Der obere Turmabschnitt 5 weist eine Reihe von ringförmigen und sich konisch nach oben hin verjüngenden Turmsegmenten 15 auf, die miteinander verschraubt sind. Die Turmsegmente 15 sind im Wesentlichen als Hohlprofile ausgebildet und bilden eine Röhre. In der Röhre sind jedoch Einbauten wie Zwischenböden, Leitern und/oder Treppen vorgesehen, so dass der Turm 1 von Personen bestiegen werden kann. Der obere Turmabschnitt 5 ist über den Übergangskörper 6 im Sinne eines Adapters mit dem unteren Turmabschnitt 4, insbesondere den Eckstielen 3 des unteren Turmabschnitts 4, verbunden.

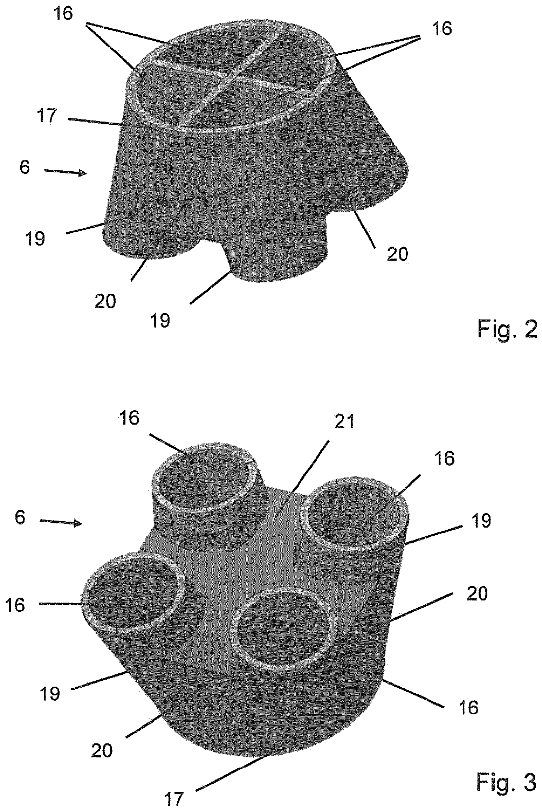

Ein Übergangskörper 6, der zum Verbinden mit einem unteren Turmabschnitt 4 umfassend vier Eckstiele 3 und mit einem oberen Turmabschnitt 5 in Form eines Rohrturms mit kreisrundem Querschnitt vorgesehen ist, ist in den Fig. 2 und 3 näher dargestellt. Dabei sind der besseren Übersichtlichkeit halber die Anbindungsflansche weggelassen worden, mit denen der Übergangskörper 6 mit dem oberen Turmabschnitt 5 und den Eckstielen 3 des unteren Turmabschnitts 4 verschraubt ist. Die Anbindungsflansche sind als gelochte Ringflansche ausgebildet und innenliegend bezogen auf die jeweilige Öffnung und/oder den Übergangskörper 6 vorgesehen. Die Anbindungsflansche können daher aus dem Innenraum des Übergangskörpers 6 mit den angrenzenden Anbindungsflanschen des oberen Turmabschnitts 5 und des unteren Turmabschnitts 4 verschraubt werden.

Der Übergangskörper 6 umfasst vier baugleiche Segmente 16, die im oberen Bereich des Übergangskörpers 6 ineinander übergehen. Die äußeren Bereiche der Segmente 16 gehen unter Bildung eines ringförmigen Anschlussmantels 17 ineinander über. Dieser Anschlussmantel 17 trägt an seinem oberen Ende den in den Fig. 2 und 3 nicht dargestellten Anbindungsflansch zum Verschrauben des Übergangskörpers 6 mit dem oberen Turmabschnitt 5. Die inneren Elemente der Segmente 16 gehen ebenfalls ineinander über. Die Verbindungsstellen 18 der inneren Bereiche der Segmente 16 bilden ein Kreuz, dessen Mittelpunkt im Wesentlichen auf der zentralen Turmachse des Turms 1 der Windkraftanlage 2 liegt.

Die Segmente 16 des Übergangskörpers 6 sind gleichförmig um diese zentrale Turmachse herum angeordnet. Zudem weisen die Segmente 16 an ihren oberen Enden Querschnitte in Form von 1/4-Kreissegmenten mit einem Öffnungswinkel von jeweils etwa 90° auf. Die Querschnitte der Segmente ändern sich jedoch von oben nach unten. An den unteren Enden weisen die Segmente 16 im Wesentlichen kreisförmige Querschnitte auf. Dort gehen die Segmente 16 in untere Anbindungsflansche über, die ebenfalls kreisförmig aber nicht dargestellt sind. Die unteren Anbindungsflansche sind dabei symmetrisch um die zentrale Turmachse herum angeordnet.

Die Wandungen der dargestellten und insoweit bevorzugten Segmente 16 werden durch Stahlbleche gebildet, die in entsprechende Formen gebogen bzw. gepresst worden sind. Die Stahlbleche bilden über die gesamte Längserstreckung der Segmente einen umlaufenden Segmentmantel 19. Bei dem dargestellten und insoweit bevorzugten Übergangskörper 6 sind seitlich zwischen jeweils zwei benachbarten Segmentmänteln 19 im Wesentlichen vertikal verlaufende seitliche Verbindungsbleche 20 vorgesehen. In Summe weist der Übergangskörper 6 vier solcher seitlicher Verbindungsbleche 20 auf. Zudem ist noch ein im Wesentlichen horizontal ausgerichtetes Verbindungsblech 21 vorgesehen, das einerseits an die Unterkanten der vertikalen Verbindungsbleche 20 und andererseits die inneren Bereiche der Segmentmäntel 19 heranreicht. Letztere werden etwa über die Hälfte ihres Umfangs von dem unteren Verbindungsblech 21 umgriffen.

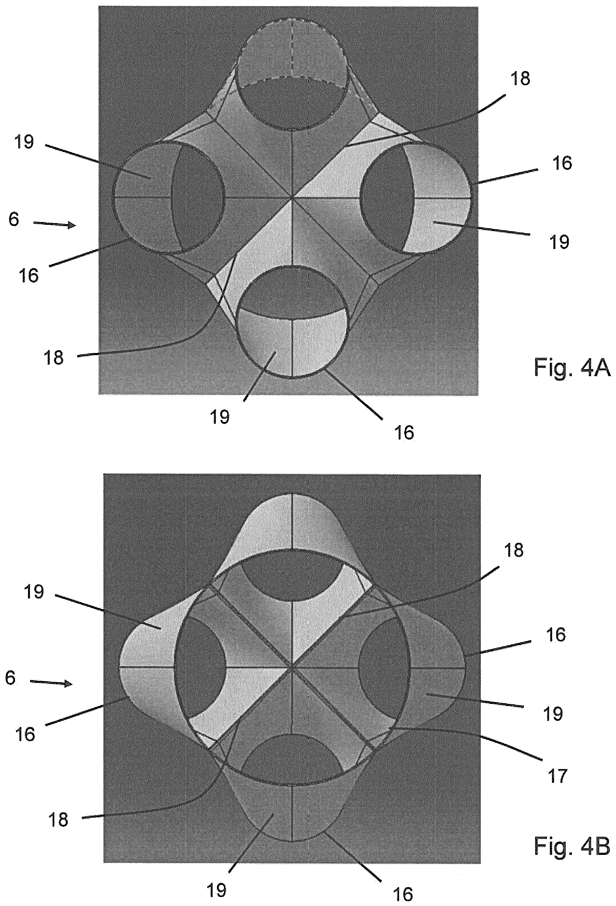

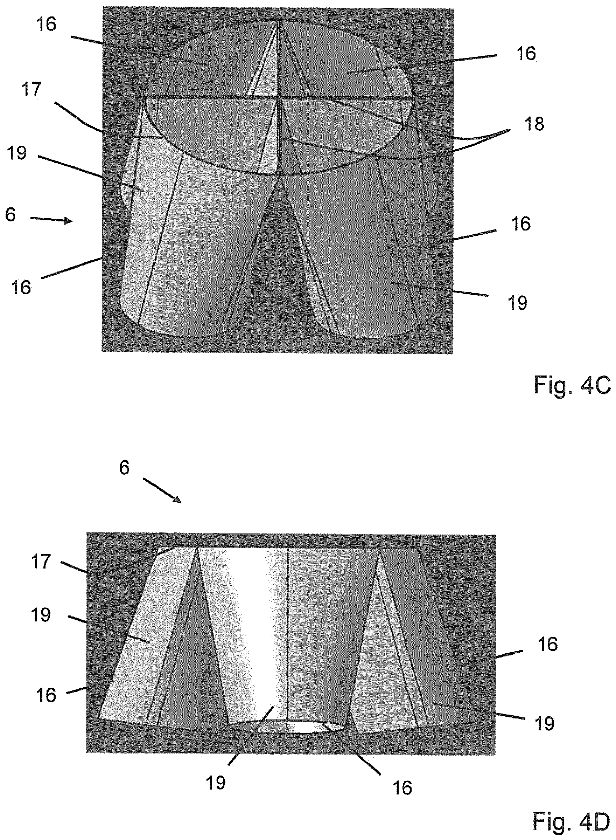

Zum besseren Verständnis der Form des Übergangskörpers 6 wird auf die Fig. 4A bis 4D verweisen. Diese zeigen den inneren Aufbau des Übergangskörpers, wie er sich durch die Verbindung der Segmente 16 über die kreuzförmigen Verbindungsstellen 18 ergibt. Alle übrigen Bauteile des Übergangskörpers 6, wie beispielsweise die Verbindungsbleche 20,21 und die Anbindungsflansche, sind daher in den Fig. 4A bis 4D weggelassen worden. In der Fig. 4A ist der Übergangskörper 6 in einer Ansicht von unten und in der Fig. 4B in einer Ansicht von oben dargestellt. Der Übergangskörper 6 ist zudem in der Fig. 4C in einer perspektivischen Ansicht und in der Fig. 4D in einer Seitenansicht dargestellt.

Die einzelnen Segmente 16 weisen an ihrem unteren Ende einen kreisrunden Querschnitt auf. In Richtung des oberen Endes der Segmente 16 verändert sich dieser Querschnitt stetig, bis er etwa die Form eines Kreissegments oder Tortenstücks annimmt. Die inneren Bereiche der Segmente 16 stoßen an linienförmigen Verbindungsstellen 18 zusammen, die etwa sternförmig, vorliegend etwa kreuzförmig, ausgebildet sind. Das Zentrum der durch die Verbindungsstellen 18 zwischen den Segmenten 16 gebildeten sternförmigen oder kreuzförmigen Struktur ist in etwa auf der zentralen Turmachse angeordnet, und zwar vorzugsweise wie auch das Zentrum des Anschlussmantels 17. Der Anschlussmantel 17 wird von den äußeren Bereichen der Segmente 16 gebildet und ist am oberen Ende des Übergangskörpers 6 umlaufend vorgesehen.

Beim in den Fig. 2 bis 4 dargestellten Übergangskörper 6 sind des Weiteren die nicht dargestellten Anbindungsflansche an das obere Ende des Anschlussmantels 17 und die unteren Enden der Segmente 16 angeschweißt. Der Übergangskörper 6 selbst wird jedoch vorzugsweise über die Anbindungsflansche mit dem oberen und dem unteren Turmabschnitt 4,5 verschraubt. Bei dem Übergangskörper 6 gemäß Fig. 2 bis 4 weist der umlaufende Anschlussmantel 17 des Übergangskörpers 6 eine sehr geringe vertikale Erstreckung auf. Die Höhe des Anbindungsmantels 17 beschränkt sich dabei im Wesentlichen auf die Verbindung der Segmente 16 untereinander und die Verbindung des Anschlussmantels 17 an den Anbindungsflansch. Alternativ könnte der Anschlussmantel 17 aber auch höher ausgebildet sein, wobei die Verbindung der inneren Bereiche der Segmente 16 zur sternförmigen oder kreuzförmigen Struktur weiter etwa auf Höhe des Anschlussmantels 17, insbesondere des oberen Endes des Anschlussmantels 17, oder darunter vorgesehen sein kann. Die inneren Bereiche der Segmente 16 sollten jedoch oberhalb der unteren Enden der Segmente 16 ineinander übergehen.

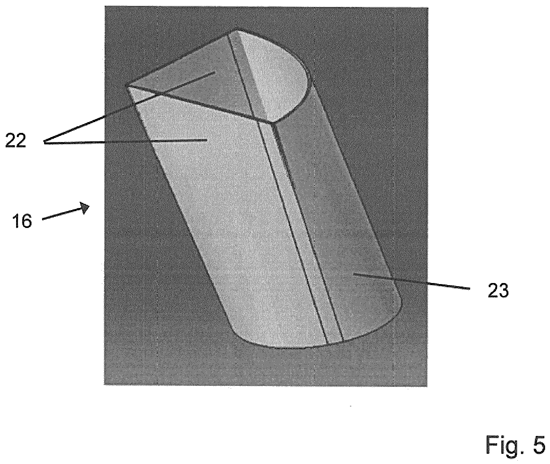

Die Segmente 16 sind baugleich und werden durch Verschweißen von trapezförmigen entsprechend gebogenen Blechen 22,23 gebildet. In diesem Zusammenhang wird insbesondere auf die Fig. 5 verwiesen, in der ein einzelnes Segment 16 des Übergangskörpers 6 gemäß der Fig. 2 bis 4 dargestellt ist. Das dargestellte Segment 16 wird durch insgesamt drei umgeformte und miteinander verschweißte Bleche 22,23 gebildet. Zwei der Bleche 22 sind dabei aus einem im Wesentlichen identischen Blechzuschnitt gebildet und im Wesentlichen identisch umgeformt. Diese Bleche 22 weisen also im Wesentlichen die gleiche Form auf. Diese beiden Bleche 22 bilden bezogen auf den Übergangskörper 6 den inneren Bereich, während das dritte, von den anderen Blechen 22 abweichend gebogene Blech 23 bezogen auf den Übergangskörper 6 im Wesentlichen den äußeren Bereich des Segments 16 bildet. Die auf diese Weise gebildeten Segmente 16 sind untereinander ebenfalls durch Verschweißen miteinander verbunden.

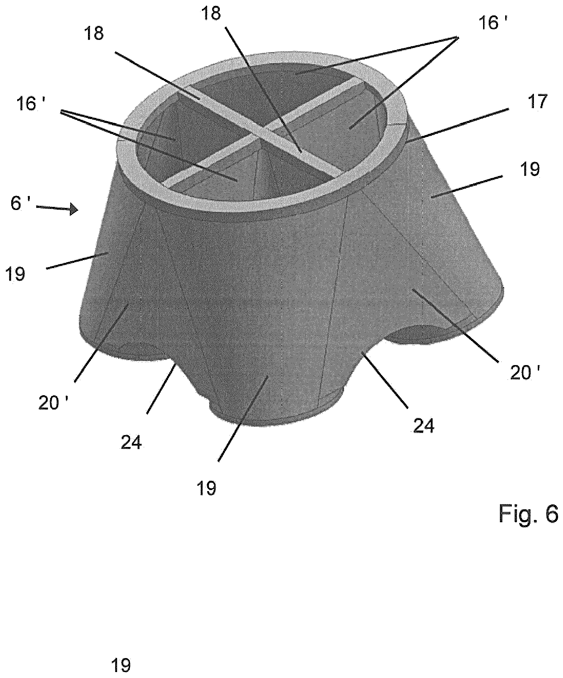

Eine alternative Ausgestaltung des Übergangskörpers 6' ist in der Fig. 6 dargestellt. Der entsprechende Übergangskörper 6' ähnelt dabei in seinem grundsätzlichen Aufbau dem Übergangskörper 6 gemäß Fig. 2 bis 5, weshalb nachfolgend lediglich auf die Unterschiede der Übergangskörper 6,6' eingegangen wird. Beim Übergangskörper 6' gemäß Fig. 6 sind zwischen jeweils zwei Segmenten 16' seitliche Verbindungsbleche 20' vorgesehen, die überwiegend vertikal ausgerichtet sind. Diese Verbindungsbleche 20' sind zudem in etwa fluchtend mit der Außenseite des Übergangskörpers 6' vorgesehen. Die dargestellten und insoweit bevorzugten seitlichen Verbindungsbleche 20' weisen an ihrem unteren Rand eine bogenförmige Aussparung 24 auf. Auf ein im Wesentlichen horizontal ausgerichtetes Verbindungsblech ist bei dem Übergangskörper 6' gemäß Fig. 6 verzichtet worden.

Ein weiterer Unterschied des Übergangskörpers 6' gemäß Fig. 6 verglichen mit dem Übergangskörper 6 gemäß Fig. 2 bis 4 besteht in der Fertigung und Ausgestaltung der einzelnen Segmente 16'. Diese werden durch Verschweißen von im Wesentlichen fünf dreieckigen Blechen 25,26 und einem trapezförmigen Blech 27 erhalten. Die dreieckigen Bleche 25,26 können aus einem im Wesentlichen identischen Blechzuschnitt erhalten werden, wobei die Bleche 25,26 auf zwei unterschiedliche Weisen umgeformt werden, um die gewünschte gebogene Form zu erhalten. Drei der Bleche 25 weisen nach dem Umformen eine im Wesentlichen gleiche Form auf, während die anderen beiden dreieckigen Bleche 26 ebenfalls im Wesentlichen eine identische Form aufweisen. Das trapezförmige und ebenfalls aus einem flachen Zuschnitt umgeformte Blech 27 bildet den Großteil der im Übergangskörper 6' nach außen weisenden Seite des Segments 16'.

## Patentansprüche

1. Übergangskörper (6,6') zur Anordnung zwischen einem oberen Turmabschnitt (5) und einem unteren Turmabschnitt (4) eines Turms (1) für eine Windkraftanlage (2), mit einem im Wesentlichen ringförmigen oberen Anbindungsflansch zum Verbinden des Übergangskörpers (6) mit einem oberen Turmabschnitt (5) und mit wenigstens drei im Wesentlichen ringförmigen unteren Anbindungsflanschen jeweils zum Verbinden mit einer Eckstiele (3) eines unteren Turmabschnitts (4), wobei der Übergangskörper (6,6') mehrere um eine zentrale Turmachse herum angeordnete Segmente (16,16') aufweist, wobei die Anzahl der Segmente (16,16') der Anzahl der Eckstiele (3) entspricht, wobei die oberen Abschnitte der Segmente (16,16') an der Außenseite des Übergangskörpers (6,6') einen ringförmig umlaufenden, den oberen Anbindungsflansch tragenden Anschlussmantel (17) bilden und wobei die unteren Abschnitte der Segmente (16,16') jeweils ringförmig umlaufende einen unteren Anbindungsflansch tragende Segmentmäntel (19) bilden,
**dadurch gekennzeichnet, dass** die Segmentmäntel (19) im oberen Bereich an nach innen weisenden Abschnitten in spitzem Winkel ineinander übergehen.

2. Übergangskörper nach Anspruch 1,
**dadurch gekennzeichnet, dass** die Segmente (16) im Wesentlichen gleichartig, vorzugsweise baugleich, ausgebildet sind.

3. Übergangskörper nach Anspruch 1 oder 2,
**dadurch gekennzeichnet, dass** die Segmentmäntel (19) derart ineinander übergehen, dass der Übergangskörper (6,6') im Bereich der zentralen Turmachse durch die Segmentmäntel (19) nach unten abgeschlossen ist.

4. Übergangskörper nach einem der Ansprüche 1 bis 3,
**dadurch gekennzeichnet, dass** die Segmentmäntel (19) derart ineinander übergehen, dass die Übergänge der Segmentmäntel (19), vorzugsweise ausgehend von der zentralen Turmachse, eine sternförmige Struktur bilden.

5. Übergangskörper nach einem der Ansprüche 1 bis 4,
**dadurch gekennzeichnet, dass** die oberen Bereiche der Segmentmäntel (19) die Form eines Kreissegments aufweisen.

6. Übergangskörper nach einem der Ansprüche 1 bis 5,
**dadurch gekennzeichnet, dass** die Segmentmäntel (19) im oberen Bereich sich stetig verändernde Querschnitte aufweisen.

7. Übergangskörper nach einem der Ansprüche 1 bis 6,
**dadurch gekennzeichnet, dass** sich die Segmentmäntel (19) nach unten verjüngen.

8. Übergangskörper nach einem der Ansprüche 1 bis 7,
**dadurch gekennzeichnet, dass** der obere Anschlussflansch und/oder die unteren Anschlussflansche kreisförmig ausgebildet sind.

9. Übergangskörper nach einem der Ansprüche 1 bis 8,
**dadurch gekennzeichnet, dass** der obere Anschlussflansch und/oder die unteren Anschlussflansche innenliegend angeordnet sind.

10. Übergangskörper nach einem der Ansprüche 1 bis 9,
**dadurch gekennzeichnet, dass** die Segmentmäntel (19), vorzugsweise Segmente (6,6'), durch im Wesentlichen längs verschweißte Stahlbleche (22,23,25,26,27) gebildet werden.

11. Übergangskörper nach Anspruch 10,
**dadurch gekennzeichnet, dass** die Stahlbleche (22,23,25,26,27) gebogene dreieckförmige und/oder trapezförmige Stahlbleche (22,23,25,26,27) sind.

12. Übergangskörper nach einem der Ansprüche 1 bis 11,
**dadurch gekennzeichnet, dass** die Segmentmäntel (29) durch seitliche Verbindungsbleche (20,20') und/oder ein im Wesentlichen quer zur zentralen Turmachse angeordnetes unteres Verbindungsblech (21) miteinander verbunden sind.

13. Turm (1) für eine Windkraftanlage (2) mit einem oberen Turmabschnitt (5) in Form eines Rohrturms, einem wenigstens drei Eckstiele (3) aufweisenden unteren Turmabschnitt (4) und einem den oberen Turmabschnitt (5) mit dem unteren Turmabschnitt (4) verbindenden Übergangskörper (6),
**dadurch gekennzeichnet, dass** der Übergangskörper (6) ein Übergangskörper (6) nach einem der Ansprüche 1 bis 12 ist.

14. Turm nach Anspruch 13,
**dadurch gekennzeichnet, dass** der obere Turmabschnitt (5) und/oder die Eckstiele (3) im Wesentlichen als Hohlprofil, insbesondere rohrförmig, ausgebildet sind.

15. Turm nach einem der Ansprüche 13 oder 14,
**dadurch gekennzeichnet, dass** der untere Turmabschnitt (4) als Fachwerkturm ausgebildet ist und dass die Eckstiele (3) durch, vorzugsweise horizontal oder diagonal verlaufende, Streben (13,14) untereinander verbunden sind.

## Claims

1. Transition body (6,6') for arrangement between an upper tower section (5) and a lower tower section (4) of a tower (1) for a wind power station (2), with an essentially annular upper connection flange for joining the transition body (6) to an upper tower section (5) and with at least three essentially annular lower connection flanges each for joining to a corner leg (3) of a lower tower section (4), wherein the transition body (6,6') has several segments (16,16') arranged about a central tower axis, wherein the number of segments (16,16') corresponds to the number of corner legs (3), wherein the upper sections of the segments (16,16') on the outside of the transition body (6,6') form an annular circumferential connection envelope (17) bearing the upper connection flange and wherein the lower sections of the segments (16,16') each form annular circumferential segment envelopes (19) bearing a lower connection flange, **characterized in that** the segment envelopes (19) in the upper region pass into one another at an acute angle at inwardly pointing sections.

2. Transition body according to Claim 1, **characterized in that** the segments (16) are essentially similar in configuration, preferably structurally identical.

3. Transition body according to Claim 1 or 2,
**characterized in that** the segment envelopes (19) pass into one another such that the transition body (6,6') is closed off at the bottom by the segment envelopes (19) in the region of the central tower axis.

4. Transition body according to one of Claims 1 to 3,
**characterized in that** the segment envelopes (19) pass into one another such that the transitions of the segment envelopes (19) form a starlike structure, preferably starting from the central tower axis.

5. Transition body according to one of Claims 1 to 4,
**characterized in that** the upper regions of the segment envelopes (19) have the shape of a circle segment.

6. Transition body according to one of Claims 1 to 5,
**characterized in that** the segment envelopes (19) have steadily changing cross sections in the upper region.

7. Transition body according to one of Claims 1 to 6,
**characterized in that** the segment envelopes (19) taper toward the bottom.

8. Transition body according to one of Claims 1 to 7,
**characterized in that** the upper connection flange and/or the lower connection flange are circular in shape.

9. Transition body according to one of Claims 1 to 8,
**characterized in that** the upper connection flange and/or the lower connection flange are arranged on the inside.

10. Transition body according to one of Claims 1 to 9,
**characterized in that** the segment envelopes (19), preferably the segments (6,6'), are formed by essentially lengthwise welded steel plates (22,23,25,26,27).

11. Transition body according to Claim 10,
**characterized in that** the steel plates (22,23,25,26,27) are triangular and/or trapezoidal curved steel plates (22,23,25,26,27).

12. Transition body according to one of Claims 1 to 11,
**characterized in that** the segment envelopes (29) are joined together by lateral connection plates (20,20') and/or a lower connection plate (21) arranged essentially transversely to the central tower axis.

13. Tower (1) for a wind power station (2) with an upper tower section (5) in the form of a tubular tower, a lower tower section (4) having at least three corner legs (3) and a transition body (6) joining the upper tower section (5) to the lower tower section (4),
**characterized in that** the transition body (6) is a transition body (6) according to one of Claims 1 to 12.

14. Tower according to Claim 13,
**characterized in that** the upper tower section (5) and/or the corner legs (3) are fashioned essentially as hollow profiles, especially tubular ones.

15. Tower according to one of Claims 13 or 14,
**characterized in that** the lower tower section (4) is fashioned as a framework tower and the corner legs (3) are joined together by preferably horizontally or diagonally running braces (13,14).

## Revendications

1. Corps de transition (6, 6') destiné à être disposé entre une portion de tour supérieure (5) et une portion de tour inférieure (4) d'une tour (1) pour une éolienne (2), comprenant une bride de raccordement supérieure de forme essentiellement annulaire pour le raccordement du corps de transition (6) à une portion de tour supérieure (5) et au moins trois brides de raccordement inférieures de forme essentiellement annulaire pour le raccordement respectif à un montant d'angle (3) d'une portion de tour inférieure (4), le corps de transition (6, 6') présentant plusieurs segments (16, 16') disposés autour d'un axe de tour central, le nombre des segments (16, 16') correspondant au nombre des montants d'angle (3), les portions supérieures des segments (16, 16') au niveau du côté extérieur du corps de transition (6, 6') formant une enveloppe de raccordement (17) s'étendant sous forme annulaire sur la périphérie, portant la bride de raccordement supérieure, et les portions inférieures des segments (16, 16') formant à chaque fois des enveloppes de segments (19) s'étendant sous forme annulaire sur la périphérie et portant une bride de raccordement inférieure,
**caractérisé en ce que**
les enveloppes de segments (19) se prolongent dans la région supérieure les unes dans les autres suivant un angle aigu au niveau de portions tournées vers l'intérieur.

2. Corps de transition selon la revendication 1,
**caractérisé en ce que**
les segments (16) sont réalisés essentiellement de manière identique, de préférence avec une construction identique.

3. Corps de transition selon la revendication 1 ou 2,
**caractérisé en ce que**
les enveloppes de segments (19) se prolongent les unes dans les autres de telle sorte que le corps de transition (6, 6') se termine vers le bas dans la région de l'axe de tour central par les enveloppes de segments (19).

4. Corps de transition selon l'une quelconque des revendications 1 à 3,
**caractérisé en ce que**
les enveloppes de segments (19) se prolongent les unes dans les autres de telle sorte que les transitions des enveloppes de segments (19), de préférence à partir de l'axe de tour central, forment une structure en forme d'étoile.

5. Corps de transition selon l'une quelconque des revendications 1 à 4,
**caractérisé en ce que**
les régions supérieures des enveloppes de segments (19) présentent la forme d'un segment de cercle.

6. Corps de transition selon l'une quelconque des revendications 1 à 5,
**caractérisé en ce que**
les enveloppes de segments (19) présentent dans la région supérieure des sections transversales variant en continu.

7. Corps de transition selon l'une quelconque des revendications 1 à 6,
**caractérisé en ce que**
les enveloppes de segments (19) se rétrécissent vers le bas.

8. Corps de transition selon l'une quelconque des revendications 1 à 7,
**caractérisé en ce que**
la bride de raccordement supérieure et/ou les brides de raccordement inférieures sont réalisées sous forme circulaire.

9. Corps de transition selon l'une quelconque des revendications 1 à 8,
**caractérisé en ce que**
la bride de raccordement supérieure et/ou les brides de raccordement inférieures sont disposées à l'intérieur.

10. Corps de transition selon l'une quelconque des revendications 1 à 9,
**caractérisé en ce que**
les enveloppes de segments (19), de préférence les segments (6, 6'), sont formés par des tôles d'acier (22, 23, 25, 26, 27) soudées essentiellement longitudinalement.

11. Corps de transition selon la revendication 10,
**caractérisé en ce que**
les tôles d'acier (22, 23, 25, 26, 27) sont des tôles d'acier (22, 23, 25, 26, 27) cintrées de forme triangulaire et/ou trapézoïdale.

12. Corps de transition selon l'une quelconque des revendications 1 à 11,
**caractérisé en ce que**
les enveloppes de segments (29) sont reliées les unes aux autres par des tôles de raccordement latérales (20, 20') et/ou par une tôle de raccordement inférieure (21) essentiellement disposée transversalement par rapport à l'axe de tour central.

13. Tour (1) pour une éolienne (2) comprenant une portion de tour supérieure (5) en forme de tour tubulaire, une portion de tour inférieure (4) présentant au moins trois montants d'angle (3) et un corps de transition (6) reliant la portion de tour supérieure (5) à la portion de tour inférieure (4),
**caractérisée en ce que**
le corps de transition (6) est un corps de transition (6) selon l'une quelconque des revendications 1 à 12.

14. Tour selon la revendication 13,
**caractérisée en ce que**
la portion de tour supérieure (5) et/ou les montants d'angle (3) sont réalisés essentiellement sous forme de profilé creux, en particulier de forme tubulaire.

15. Tour selon l'une quelconque des revendications 13 ou 14,
**caractérisée en ce que**
la portion de tour inférieure (4) est réalisée sous forme de tour en treillis et **en ce que** les montants d'angle (3) sont raccordés les uns aux autres par des entretoises (13, 14) s'étendant de préférence horizontalement ou en diagonale.
